# EUROPEAN PATENT APPLICATION

(11) **EP 3 489 184 A1**
(43) Date of publication of application: **29.05.2019**
(21) Application number: 18208449.1
(22) Date of filing: 27.11.2018
(51) Int. Cl.: B66B 5/00

(54) **HOISTWAY INSPECTION DEVICE**

(30) Priority: 28.11.2017 US 201715823897
(71) Applicant: Otis Elevator Company, Farmington, Connecticut 06032 (US)
(72) Inventor: MIYAJIMA, Hiromitsu, Chiba, Chiba 289-1693 (JP); SEKI, Hisanori, Chiba, Chiba 289-1693 (JP); YAMADA, Atsushi, Chiba, Chiba 289-1693 (JP)
(74) Representative: Schmitt-Nilson Schraud Waibel Wohlfrom Patentanwälte Partnerschaft mbB

(57) **Abstract**

According to one embodiment, a hoistway inspection device is provided. The hoistway inspection device comprises a guiding device which extends vertically along the hoistway, an aerial vehicle which is guided by the guiding device to fly along the hoistway and a camera provided on the aerial vehicle for obtaining image data of the inside of the hoistway. The aerial vehicle may fly to a desirable height and then fly rotatably about the guiding device at that height.

## Description

This invention generally relates to an elevator system. More particularly, this invention relates to a hoistway inspection device for an elevator system.

There are various times and reasons for inspecting one or more conditions within an elevator hoistway. For example, inspection is necessary for restarting the elevator system after an earthquake. In most situations, a mechanic visually inspects the hoistway by moving to several floors of a building and opening the hall door at each floor to check the conditions inside the hoistway. Such inspection is time consuming and it is particularly a matter of concern when it is necessary to inspect a hoistway of a high-rise building.

JP 2017-128440 A discloses a hoistway inspection device for inspecting a hoistway using an aerial vehicle having an imaging device. The aerial vehicle is radio controlled by a mechanic to fly within the hoistway and obtain images of elevator equipment within the hoistway. However, such device is not practical since the mechanic must control the aerial vehicle within the limited space of the hoistway such that it does not hit the car, counterweight, ropes, sheaves or other elevator equipment.

In view of the above and other considerations, there is a need for a hoistway inspection device for inspecting a hoistway using an aerial vehicle without the risk of collision with elevator equipment inside the hoistway.

According to one embodiment, a hoistway inspection device is provided which comprises a guiding device which extends vertically along the hoistway, an aerial vehicle which is guided by the guiding device to fly along the hoistway and a camera provided on the aerial vehicle for obtaining image data of the inside of the hoistway.

Particular embodiments may include any of the following optional features, alone or in combination:
The aerial vehicle may fly to a desirable height and then may fly rotatably about the guiding device at that height.

The camera may be a wide-angle camera.

The camera may be an omnidirectional camera.

The aerial vehicle may comprise at least one propulsion assembly provided on an air frame, a motor for driving each propulsion assembly, a motor controller for controlling each of the motors and a printed circuit board including a memory.

The aerial vehicle may be a quadricopter.

The guiding device may be a guide wire.

The aerial vehicle may comprise a wireless module for communicating image data to an outside device.

The aerial vehicle may be attached to the guiding device via an articulated leg comprising a slider guide for slidably engaging the guiding device.

The slider guide may include a bracket and a cover slidably engaging the bracket. The bracket may support a pair of bracket rollers and the cover may support a pair of cover rollers biased toward the bracket rollers so that the guiding device is sandwiched between the rollers when the slider guide engages the guiding device.

The rollers may each have a rotational axis perpendicular to the bracket and a shape complementary to the guide wire.

The articulated leg may restrict the attitude of the aerial vehicle between an upper limit and a lower limit during flight.

The slider guide may comprise anti-drop shoes which prevent the aerial vehicle from sliding down the guide wire when the aerial vehicle loses power.

The hoistway inspection device further may comprise a light for illuminating a shooting area of the camera.

According to another embodiment, a method for inspecting a hoistway is provided which comprises providing a guiding device which extends vertically along the hoistway, attaching an aerial vehicle to the guiding device such that the aerial vehicle is guided by the guiding device during flight, flying the aerial vehicle along the hoistway and obtaining image data of the inside of the hoistway while flying the aerial vehicle.

Particular embodiments may include any of the following optional features, alone or in combination:
Flying the aerial vehicle along the hoistway may include flying the aerial vehicle to a desirable height and then flying the aerial vehicle rotatably about the guiding device at that height.

Obtaining image data may include obtaining image data using a wide-angle camera.

Attaching the aerial vehicle to the guiding device may includes attaching the aerial vehicle to the guiding device via an articulated leg comprising a slider guide for slidably engaging the guiding device.

The method further may comprise wirelessly communicating image data to an outside device.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

The foregoing and other features, and advantages of the disclosure are apparent from the following detailed description taken in conjunction with the accompanying drawings in which like elements are numbered alike in the several Figs.
Fig. 1 illustrates a schematic view of an elevator system including the hoistway inspection device of the present invention.
Fig. 2 illustrates a top view of an aerial vehicle of the hoistway inspection device shown in Fig. 1.
Fig. 3 illustrates a side view of the aerial vehicle shown in Fig. 2.
Fig. 4 illustrates a side view showing the upper and lower limits of movement of the aerial vehicle shown in Fig. 2.
Fig. 5 is a block diagram of the aerial vehicle shown in Fig. 2.
Figs. 6A and 6B illustrate side views of a slider guide of the aerial vehicle shown in Fig. 2.
Fig. 7 illustrates a top view of the slider guide of Fig. 6.
Fig. 8 illustrates a top view of the slider guide similar to Fig. 7 with the cover slid to an end.
Fig. 9 illustrates a further embodiment of the slider guide.
Fig. 10 illustrates how the slider guide of Fig. 9 works when the aerial vehicle loses power.

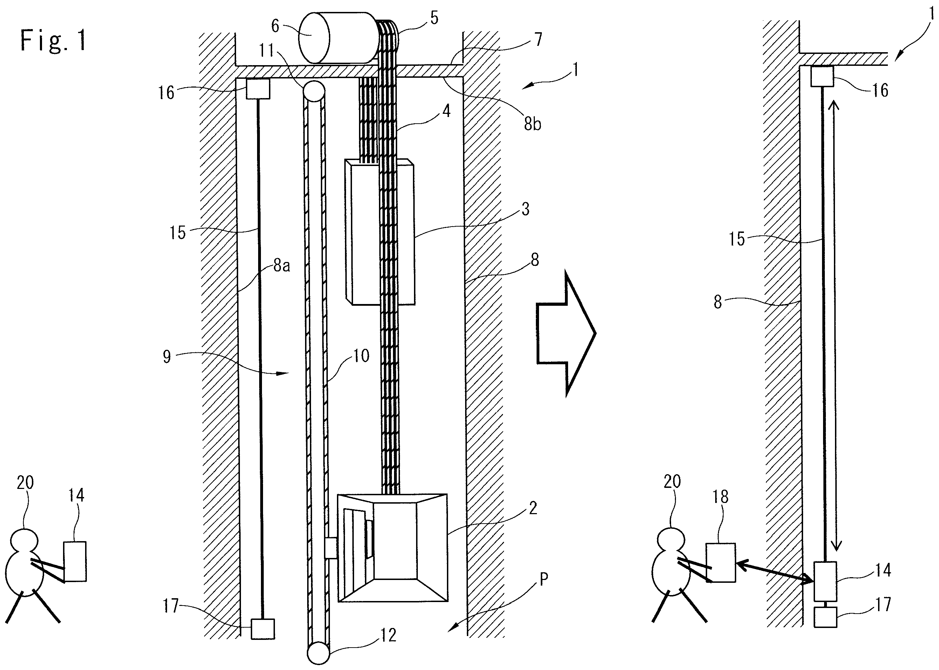

Fig. 1 schematically shows selected portions of an example elevator system 1. An elevator car 2 is connected to a counterweight 3 by a plurality of hoisting ropes 4. The ropes 4 extend over a traction sheave 5 which is driven by a machine 6 which may be positioned in a machine room 7. Traction between the sheave 5 and the ropes 4 drives the car 2 and the counterweight 3 vertically through a hoistway 8. A governor device 9 prevents the elevator car 2 from exceeding a maximum speed. The example governor device 9 includes a governor rope 10 that travels with the elevator car 2. A governor sheave 11 and a tension sheave 12 are located at opposite ends of a loop formed by the governor rope 10. The configuration of the elevator system components may vary from this example in various aspects. In other words, the invention is not necessarily limited to the example elevator system configuration or the specific components of the illustration.

The hoistway inspection device of the present invention includes an aerial vehicle 14, a guiding device 15 for guiding the aerial vehicle 14 within the hoistway 8 and an upper stopper 16 and a lower stopper 17 provided on both ends of the guiding device 15. The guiding device 15 is a guide wire extending parallel to a hoistway wall 8a with an upper end connected to the ceiling 8b of the hoistway 8 and a lower end located near the pit P of the hoistway 8. However, the guiding device 15 may comprise a guide rail or any other means for guiding the aerial vehicle 14. The upper and lower stoppers 16, 17 both comprise a cushioning material for shock absorption. The lower stopper 17 also provides the weight to stabilize the guide wire 15.

The aerial vehicle 14 is brought to the site of inspection by the mechanic 20 and the mechanic 20 may open the hall door of the bottom floor of the elevator to attach the aerial vehicle 14 to the guide rope 15. After the aerial vehicle 14 is attached to the guide rope, it is remotely controlled via a mobile device 18 held by the mechanic 20. The mobile device 18 may be a lap top computer, tablet, cell phone, smart phone or any other device which includes a wireless module for enabling wireless communication with the wireless module of the aerial vehicle 14 via a Wi-Fi ® or cellular network, for example, and a display.

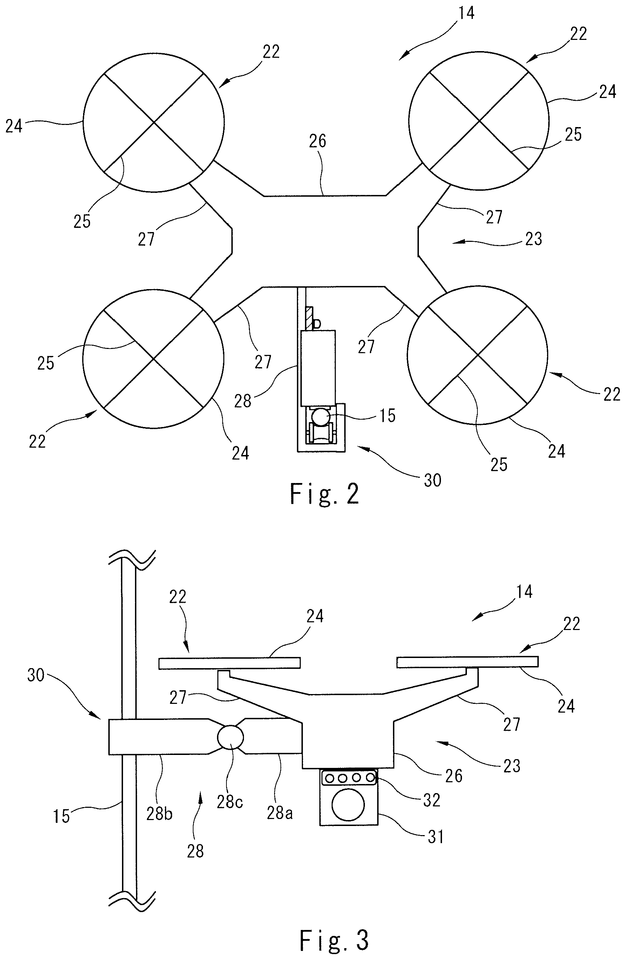

Referring to Figs. 2 and 3, a top view and an elevation view of the aerial vehicle 14 is depicted for better understanding of the structures of the aerial vehicle 14. The aerial vehicle 14 in this exemplary embodiment is a quadricopter, meaning the device has four propulsion assemblies 22 provided on an air frame 23. Each of the propulsion assemblies 22 includes a cowling 24 which surrounds a propeller 25, improving thrust and also protecting the propellers 25 from unintended strikes. The propellers 25 are driven by a respective motor that can be controlled in a differentiated manner to pilot the aerial vehicle 14 attitude-wise and speed-wise as is well known in the art.

The air frame 23 has a generally rectangular box-shaped body 26 and four arms 27 extending outward from the top portion of the body 26. The arms 27 each provide support for a respective propulsion assembly 22. An articulated leg 28 extends in the horizontal direction from the air frame 23 to the guide wire 15 to attach the aerial vehicle 14 to the guide wire 15.

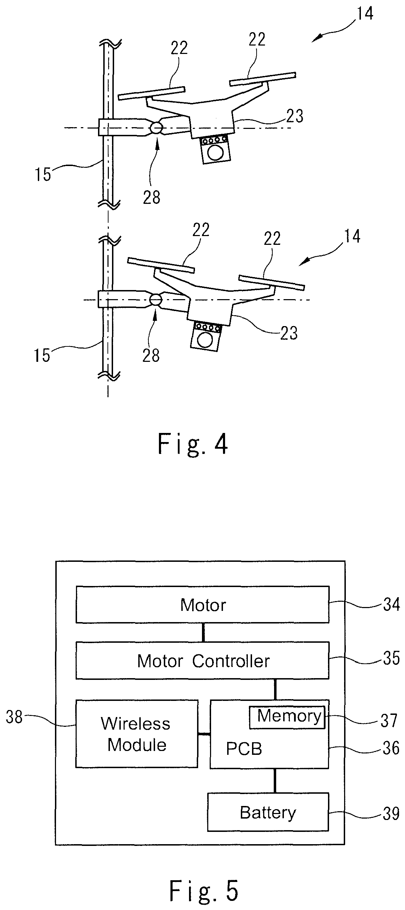

With reference to Fig. 3, the articulated leg 28 includes a first bracket 28a fixed to the air frame 23 and a second bracket 28b slidably attached to the guide wire 15 via a slider guide 30. The details of the slider guide 30 will be described below. The first bracket 28a and the second bracket 28b are rotatably connected such as by a joint 28c. The ends of the brackets 28a, 28b bump against each other to limit the rotation between the brackets so as to restrict the attitude of the aerial vehicle 14 between an upper limit and a lower limit during flight, such as shown in Fig. 4.

A camera 31 is fixed to the bottom surface of the air frame body 26 for obtaining image data of the inside of the hoistway 8. In this embodiment, the camera 31 is a wide-angle camera having a horizontal optical axis. A light 32 is provided on a frame of the camera 31 for illuminating the shooting area within the hoistway 8. The light 32 may comprise an LED light. Such image data is stored in a memory and transmitted to the mobile device 18 of the mechanic 20 via a Wi-Fi or cellular network, for example, on a real time basis. It is also possible to transmit image data to the mobile device 18 after the aerial vehicle 14 finishes obtaining images of the hoistway 8.

Fig. 5 shows a block diagram of the aerial vehicle 14. The aerial vehicle 14 contains a respective motor 34 for each propulsion assembly 22, a motor controller 35 for controlling each of the motors 34, a Printed Circuit Board (PCB) 36 including a memory 37 for storing image data, a wireless module 38 for enabling wireless communication with the mobile device 18 of the mechanic 20 via a Wi-Fi or cellular network, for example, and a battery 39 for providing power to the components of the aerial vehicle 14.

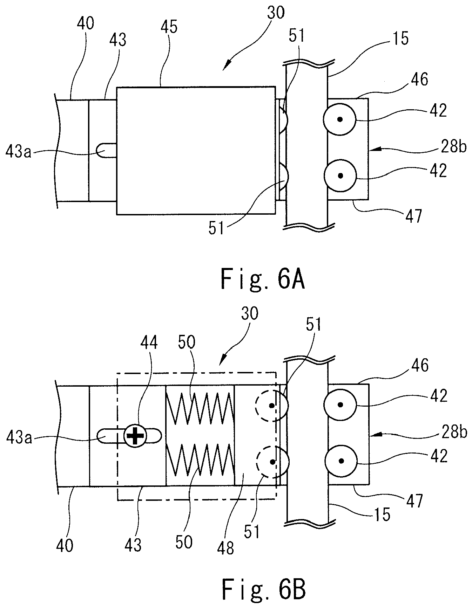

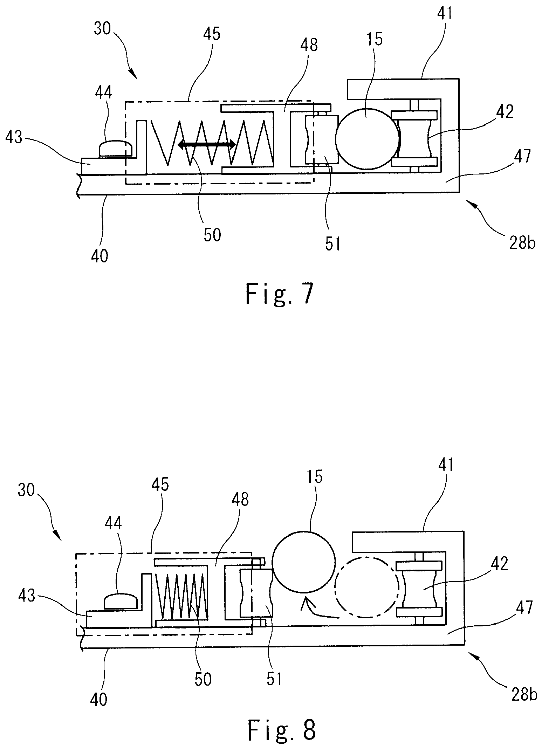

Figs. 6 to 8 show the slider guide 30 in more detail. Figs. 6A and 6B show side views of the slider guide 30 and Figs. 7 and 8 show top views of the slider guide 30. The slider guide 30 is provided on the end of the second bracket 28b of the articulated leg 28 proximate the guide wire 15. The bracket 28b has a base plate 40 and a hooked portion 41 extending from the base plate 40. The hooked portion 41 is omitted for clarity in Figs. 6A and 6B. The hooked portion 41 rotatably supports a pair of rollers 42 which contact the guide wire 15 upon engagement of the slider guide 30 with the guide wire 15. A spring seat 43 is attached to the base plate 40 by a bolt 44. The spring seat 43 includes an elongate slot 43a for receiving the bolt 44 so that the spring seat 43 may be adjusted in the longitudinal direction with respect to the bracket 28b.

A cover 45 slidably engages the upper and lower sides 46 and 47 of the bracket 28b such as by a tongue and groove joint. The cover 45 is shown in phantom in Figs. 6B, 7 and 8. A frame 48 with an H-shaped cross section is fixed on an inner surface of the cover 45 and a pair of springs 50 is connected between the spring seat 43 and the frame 48. A pair of rollers 51 is rotatably supported on the frame 48 on the side opposite the side engaging the pair of springs 50. The pair of rollers 51 together with the cover 45 and frame 48 is biased by the springs 50 toward the pair of rollers 42 supported on the hooked portion 41 and against the guide wire 15 so that the guide wire 15 is sandwiched between the rollers 42, 51. The rollers 42, 51 each have a rotational axis perpendicular to the bracket 28b and have a shape complementary to the guide wire 15.

The slider guide 30 allows for easy attachment of the aerial vehicle 14 to the guide wire 15. Once the slider guide 30 is attached to the guide wire 15 it works as a guide for enabling the aerial vehicle 14 to slide along the guide wire 15 as it flies up and down along the hoistway 8. The slider guide 30 also allows the aerial vehicle 14 to horizontally rotate about the guide wire 15.

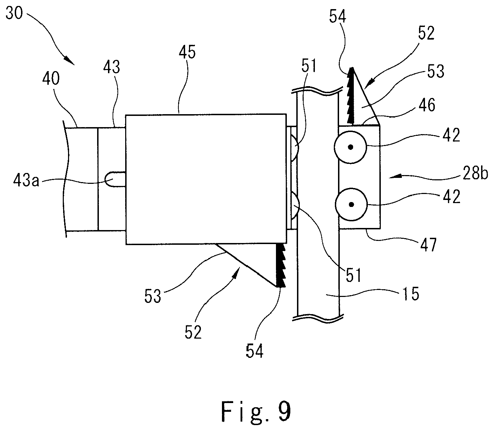

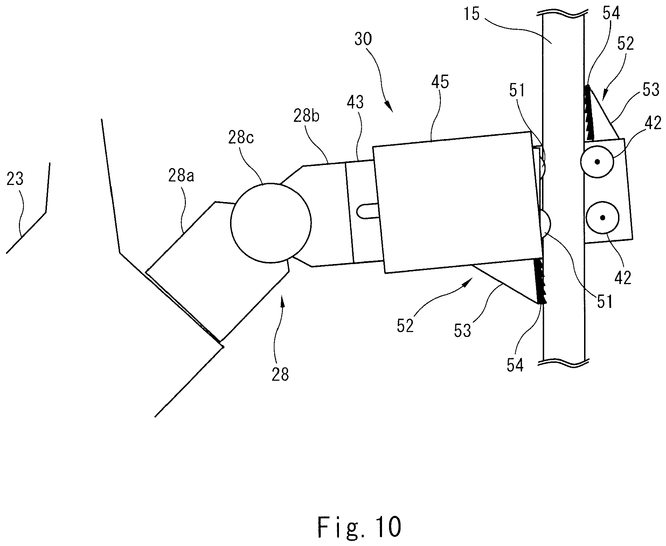

In a further embodiment shown in Fig. 9, the slider guide 30 also includes a pair of anti-drop shoes 52 having a triangular body 53 fixed to the upper and lower sides 46, 47 of the bracket 28b. The anti-drop shoes 52 are positioned on both sides of the guide rope 15 and each comprise a frictional element 54 comprised of rubber or the like on the side of the triangular body 53 facing the guide wire 15. During normal operation, a clearance is formed between the frictional elements 54 and the guide wire 15 to allow the aerial vehicle 14 to freely fly along the guide wire 15. As shown in Fig. 10, when the aerial vehicle loses power, the bracket 28b will be inclined by the weight of the aerial vehicle 14. This will cause the frictional elements 54 to engage the guide wire 15 and frictionally stop the aerial vehicle 14 from sliding down the guide wire 15.

To attach the slider guide 30 to the guide rope 15, the cover 45 is slid to the position shown in Fig. 8. In this position, the springs 50 will be compressed and a space will be created between the rollers 42, 51 for the guide wire 15 to pass through. By releasing the cover 45, the aerial vehicle 14 will be easily attached to the guide rope 15. The aerial vehicle 14 may be placed in the hoistway 8 by the mechanic with the articulated leg 28 resting on the lower stopper 17.

After the aerial vehicle 14 is attached to the guide wire 15, the mechanic 20 may vertically fly the aerial vehicle 14 to a desirable height within the hoistway 8 and then fly the aerial vehicle 14 to horizontally rotate about the guide wire 15 in order to inspect elevator equipment at that height. Since image data is transmitted to the mobile device 18 of the mechanic 20 in a real time manner, the mechanic 20 may pilot the aerial vehicle 14 such that the camera 31 is directed to areas or equipment in the hoistway 8 of concern. The position of the aerial vehicle 14 may be determined from images acquired by the camera 31. However, it is preferable to provide floor indicators within the hoistway in order to determine an accurate position.

The hoistway inspection device is located such that it does not interfere with the elevator car 2, counterweight 3, governor device 9 and other components positioned in the hoistway 8 when the aerial vehicle 14 climbs or flies along the guide rope 15 and also when the aerial vehicle 14 rotates about the guide rope 14.

After inspection is completed, the aerial vehicle 14 is flown to the bottom of the hoistway 8. The aerial vehicle 14 may be detached from the guide wire 15 by the reverse procedure as explained above.

The hoistway inspection device of the present invention provides easy and fast inspection of the hoistway 8 and is particularly advantageous for the inspection of elevator hoistways in high-rise buildings. Since the aerial vehicle 14 is guided along and about the guide wire 15 during inspection, there is no risk of collision of the aerial vehicle 14 with elevator equipment inside the hoistway 8. Furthermore, control of the aerial vehicle 14 will be simple.

In the above embodiment, the mechanic places the aerial vehicle 14 in the hoistway 8 and manually controls the movement thereof. However, the aerial vehicle 14 may be installed in the hoistway 8 and may be controlled to automatically inspect the hoistway in response to detection of an earthquake, detection of building sway, signal input from a car controller or signal input from a remote monitoring center, for example. Further, image data may be transmitted to a remote monitoring center instead of or in addition to the mobile device 18 of the mechanic 20.

Further, although the aerial vehicle 14 is flown vertically and then controlled to rotate horizontally in the above embodiment, the aerial vehicle 14 may be piloted in any manner. For example, the aerial vehicle 14 may be piloted to follow a spiral or zigzag path along the guide rope. The camera 31 may also comprise an omnidirectional camera with 180-degree super-wide-angle lenses on both lateral sides. In this case, it will not be necessary to rotate the aerial vehicle 14 about the guide wire 15.

The terminology used herein is for the purpose of describing particular embodiments only and is not intended to be limiting. While the description has been presented for purposes of illustration and description, it is not intended to be exhaustive or limited to embodiments in the form disclosed. Many modifications, variations, alterations, substitutions or equivalent arrangement not hereto described will be apparent to those of ordinary skill in the art without departing from the scope of the disclosure. Additionally, while the various embodiments have been described, it is to be understood that aspects may include only some of the described embodiments. Accordingly, the disclosure is not to be seen as limited by the foregoing description, but is only limited by the scope of the appended claims.

## Claims

1. A hoistway inspection device, comprising:
a guiding device which extends vertically along the hoistway;
an aerial vehicle which is guided by the guiding device to fly along the hoistway; and
a camera provided on the aerial vehicle for obtaining image data of the inside of the hoistway.

2. The hoistway inspection device of claim 1, wherein the aerial vehicle flies to a desirable height and then flies rotatably about the guiding device at that height.

3. The hoistway inspection device of claim 1 or 2, wherein the camera is a wide-angle camera and/or an omnidirectional camera.

4. The hoistway inspection device of any of claims 1 to 3, wherein the aerial vehicle comprises at least one propulsion assembly provided on an air frame, a motor for driving each propulsion assembly, a motor controller for controlling each of the motors and a printed circuit board including a memory.

5. The hoistway inspection device of any of claims 1 to 4, wherein the aerial vehicle is a quadricopter.

6. The hoistway inspection device of any of claims 1 to 5, wherein the guiding device is a guide wire.

7. The hoistway inspection device of any of claims 1 to 6, wherein the aerial vehicle comprises a wireless module for communicating image data to an outside device.

8. The hoistway inspection device of any of claims 1 to 7, wherein the aerial vehicle is attached to the guiding device via an articulated leg comprising a slider guide for slidably engaging the guiding device.

9. The hoistway inspection device of any of claims 1 to 8, wherein the slider guide includes a bracket and a cover slidably engaging the bracket, the bracket supporting a pair of bracket rollers and the cover supporting a pair of cover rollers biased toward the bracket rollers so that the guiding device is sandwiched between the rollers when the slider guide engages the guiding device; wherein particularly the rollers each have a rotational axis perpendicular to the bracket and a shape complementary to the guide wire.

10. The hoistway inspection device of claim 8 or 9, wherein the articulated leg restricts the attitude of the aerial vehicle between an upper limit and a lower limit during flight.

11. The hoistway inspection device of any of claims 8 to 10, wherein the slider guide comprises anti-drop shoes which prevent the aerial vehicle from sliding down the guide wire when the aerial vehicle loses power.

12. The hoistway inspection device of any of claims 1 to 11, further comprising a light for illuminating a shooting area of the camera.

13. A method for inspecting a hoistway, comprising:
providing a guiding device which extends vertically along the hoistway;
attaching an aerial vehicle to the guiding device such that the aerial vehicle is guided by the guiding device during flight;
flying the aerial vehicle along the hoistway; and
obtaining image data of the inside of the hoistway while flying the aerial vehicle.

14. The method of claim 13, wherein flying the aerial vehicle along the hoistway includes flying the aerial vehicle to a desirable height and then flying the aerial vehicle rotatably about the guiding device at that height, and/or wherein obtaining image data includes obtaining image data using a wide-angle camera.

15. The method of claim 13 or 14, wherein attaching the aerial vehicle to the guiding device includes attaching the aerial vehicle to the guiding device via an articulated leg comprising a slider guide for slidably engaging the guiding device; and/or wherein the method further comprises wirelessly communicating image data to an outside device.
